Europäisches Patentamt

European Patent Office

Office européen des brevets

(19)

(11) **EP 0 788 049 B1**

(12) **EUROPEAN PATENT SPECIFICATION**

(45) Date of publication and mention
of the grant of the patent:
**26.04.2000 Bulletin 2000/17**

(51) Int Cl.⁷: **G06F 9/44**

(21) Application number: **97100868.5**

(22) Date of filing: **13.08.1990**

(54) **Industrial expert system**

Industrielles Expertensystem

Système expert industriel

(84) Designated Contracting States:
**DE FR GB**

(30) Priority: **31.08.1989 JP 22530189**

(43) Date of publication of application:
**06.08.1997 Bulletin 1997/32**

(62) Document number(s) of the earlier application(s) in
accordance with Art. 76 EPC:
**90115511.9 / 0 415 168**

(73) Proprietor: **KABUSHIKI KAISHA TOSHIBA**
**Kawasaki-shi, Kanagawa-ken 210-8572 (JP)**

(72) Inventor: **Morita, Noboru**
**Yokohama-Shi, Kanagawa-Ken (JP)**

(74) Representative: **Liesegang, Roland, Dr.-Ing. et al**
**FORRESTER & BOEHMERT**
**Franz-Joseph-Strasse 38**
**80801 München (DE)**

(56) References cited:
**US-A- 4 866 634**

• **CONFERENCE ON THE COMPUTATION OF
ELECTROMAGNETIC FIELDS (COMPUMAG),
GRAZ, AUSTRIA, 25-28 AUG. 1987, vol. 24, no. 1,
ISSN 0018-9464, IEEE TRANSACTIONS ON
MAGNETICS, JAN. 1988, USA, pages 334-337,
XP000112302 SALDANHA C M ET AL:
"Knowledge-based computation of
electromagnetic device parameters"**
• **YOKOTA H ET AL: "A model and an architecture
for a relational knowledge base", 13TH ANNUAL
INTERNATIONAL SYMPOSIUM ON COMPUTER
ARCHITECTURE (CAT. NO.86CH2291-3),
TOKYO, JAPAN, 2-5 JUNE 1986 , ISBN
0-8186-0719-X, 1986, WASHINGTON, DC, USA,
IEEE COMPUT. SOC. PRESS, USA, PAGE(S) 2 -
9 XP000645227 * abstract * * page 5, right-hand
column, line 13 - page 6, left-hand column, line
18 ***
• **SANTOS E S ET AL: "Reasoning with uncertainty
in a knowledge based system", PROCEEDINGS
OF THE SEVENTEENTH INTERNATIONAL
SYMPOSIUM ON MULTIPLE-VALUED LOGIC
(CAT. NO.87CH2421-6), BOSTON, MA, USA,
26-28 MAY 1987 , ISBN 0-8186-4775-2, 1987,
WASHINGTON, DC, USA, IEEE COMPUT. SOC.
PRESS, USA, PAGE(S) 75 - 81 XP000040440 *
abstract * * page 75, left-hand column, line 26 -
line 40 ***

EP 0 788 049 B1

**Description**

FIELD OF THE INVENTION

The present invention relates to an industrial expert system for use in design/plan and/or fault detection in plant facilities.

BACKGROUND OF THE INVENTION

Inference engines of conventional expert system consist of a frame and production rules. The term "frame" means here a mechanism for chaining a kind of data base defining mutual relations between attributes concerning facts or observations, etc., or describing definitions, etc., of values of such attributes, and "production rules" means a mechanism for chaining deductive inferences.

Deductive inference is independent from inference engines known as knowledge bases and is performed by citing a list of knowledge for inference "if A, then B", that is, rules.

Rules can be described such as follows:

a) If "hot", then "possibly fever".
b) If "temperature > 38 °C ", then "possibly fever".

There are two rules, one being to decide the truth or falsehood of a conclusion according to truth or falsehood of establishment of phenomenon in a conditional portion such as in example a), and the other being to decide truth or falsehood of a conclusion according to whether a value of phenomenon cited in the conditional portion exceeds a certain fixed threshold value, such as in example b).

Inference is performed by tracing, syllogistically, in other words, in chain, rules in knowledge base listing rules. In this case, a rule is described so that a final conclusion of a given problem is obtained at the end of inference chain.

On the other hand, it is difficult to consider that, in design planning or fault detection for a plant, all processes up to a final conclusion are necessarily expressed by rules or frames.

That is, for design and planning, an index representing amount of some merit or some risk for a condition which is to be cited in a following inference, e.g., a whole or a portion of design or plan, is calculated frequently by citing some simple evaluation formulae in a chain and dependent upon the content of the intermediate conclusion.

For fault detection, in order to check the possibility of such a fault, according to intermediate supposition of a fault which is obtained from a result of observation or investigation, specific formulae are frequently used in a chain together with data such as observation/investigation data and specification/design data to confirm whether or not it satisfies a formula describing it phenomenally, or to calculate parameters representing a feature of the fault.

However, it is difficult to realize a process in which the execution of a deductive inference chain is interrupted and a calculation is performed by citing specific formula in a chain, by means of a conventional inference engine. In order to execute this despite such difficulty, process must temporarily leave from inference engine described by a language such as LISP, etc., and an operation process mechanism described by a language such as FORTRAN, etc., (i.e. , language different from inference language) must be driven. This leads to an increase in the processing time and a complicated mechanism, resulting in that a system whose comprehensive utility is low must be produced.

If it is considered that the feature of expert system is to cause knowledge in a knowledge base and which is an object of inference to be realized, knowledge represented by calculation formula cannot be actualized like program of exsisting language such as FORTRAN even by an expert system capable of calculating in some way, since there is no recognition that for conventional knowledge base calculation formula do not express an engineer's knowledge even if a conventional knowledge base actualizes inference knowledge, or since it is ignored that calculation formula have actual meanings and meanings on technical evaluation.

Though calculation formula include the relevant technical content, there is a limit of accuracy of mathematical expression of technical contents due to the accuracy of modelling. Accuracy of mathematical expression determines the accuracy of calculation result according to formula currently concerned as well as the accuracy of the constants and variables used therein.

Though every formula has an accuracy of mathematical expression dependent upon the problem to be handled thereby, conventional expert systems have no function for describing this accuracy and evaluating the accuracy of the calculation results by using the description.

Considering the technical meaning of mathematical formula and the description of knowledge expressed by the formula, units of constants and variables used in the formula must be attached as knowledge since values of constants and variables (attribute value) themselves differ with different units. However, this is not actualized in a conventional system.

For such constants and variables, an expert in the technical field concerned has "typical values" as his knowledge. This is actualized in the conventional system as default values. Moreover, there is an "existing range" of such constants and variables that is the expert's knowledge in the field. That is, the expert has his knowledge about such "existing range" on which, when a value outside this range is obtained, he can decide the value as being from "erroneous measurement" or "erroneous calculation".

However, the conventional system does not realize this. That is, a conventional calculation system including expert system is not capable of expressing the background technical knowledge of such calculation formula, knowledge of accuracy of mathematical expression in the formula and knowledge such as "unit" of constant and variable and "existing ranges of value" inherent to the formula.

These lead to problems of a lack of capability of knowledge expression of the knowledge base, a lack of function of expert system functioning with the knowledge base and a limited expansion range of adaptation thereofand actual application thereof. The invention relates to an expert system as defined in the preamble of claim 1 and illustrated in IEEE Transaction on Magnetics, Vol. 24, No. 1, January 1988, pages 334-337.

## SUMMARY OF THE INVENTION

There is provided an industrial expert system capable of performing, efficiently and with a simple mechanism, a calculation of index according to an evaluation formula during rule-based inference of plant design and planning, detection of existence of fault logic according to a specific formula during rule-based inference of fault detection and calculation of parameters representing feature of fault, etc., which are hardly processed by the inference engines of conventional expert systems.

Other objects is to improve the description capability of a knowledge base, to facilitate obtaining of knowledge and to improve adaptation, adaptation range and inference capability of the expert system by making description form of listed calculation formula of calculation formula describing portions of knowledge base, which is an object of a calculation mechanism of formula according to the present invention, this form being as close to "storage form of expert" or "description form on technical material expert usually uses" as possible in the same sense that a rule description is made as close to expert knowledge as possible.

A further object is to further improve the description capability of the knowledge base by handling expression of knowledge of expression accuracy of mathematical formula and knowledge of "unit" of constant and variable and "existing range of value" thereof to thereby further improve capability of expert system.

According to the present invention, these objects are achieved by a provision of an industrial expert system for use, in designing a plant and in detecting fault thereof as defined in independent claim 1.

Further embodiments of the invention was specified in the appended dependent claims.

According to the expert system constructed in this manner, deductive inference is performed by the deductive inference engine on the basis of the rule stored in the knowledge base, the calculation formula and the attributes. Therefore, the detection of fault logic by means of specific formula and the calculation of parameters representing the fault during inference, and which cannot be processed by a conventional inference engine, can be processed efficiently and with a simple mechanism.

The expressions-section takes in the form of a list of calculation formula with formula numbers. The calculation formula takes in the form of equality and either the left side or right side thereof is a result of calculation in the form of a simple term. The other side describes an operation formula for obtaining the result. The operation formula is a general polynomial and may include operational symbols such as addition, subtraction, multiplication, division and exponential, parenthesis and known functions such as sine and cosine, etc. Therefore, the description of an operational formula takes a general form which can be described even by a person who has no knowledge of a computer.

For simplicity of description, the calculation result is placed on the right side of a formula and an operational term is placed on the left side.

## BRIEF DESCRIPTION OF THE DRAWING

In the accompanying drawings:

Fig. 1 is a block diagram of an expert system.
Figs. 2A, 2B and 2C are flow charts for explanation of an operation of the system shown in Fig, 1;
Fig. 3 is a block diagram showing a knowledge base used in a forward calculation mechanism;
Fig. 4 is a diagram showing a conversion engine for converting mathematical formula into mathematical formula described by inference language;
Fig. 5 is a block diagram showing a knowledge base used in a backward calculation mechanism;
Fig. 6 is a diagram showing example of attribute and description of accuracy of calculation formula; and

Fig. 7 is a diagram showing the definition of evaluation function for evaluating accuracy of calculation result and concrete examples of energization of this function.

## DETAILED DESCRIPTION OF THE PREFERRED EMBODIMENT

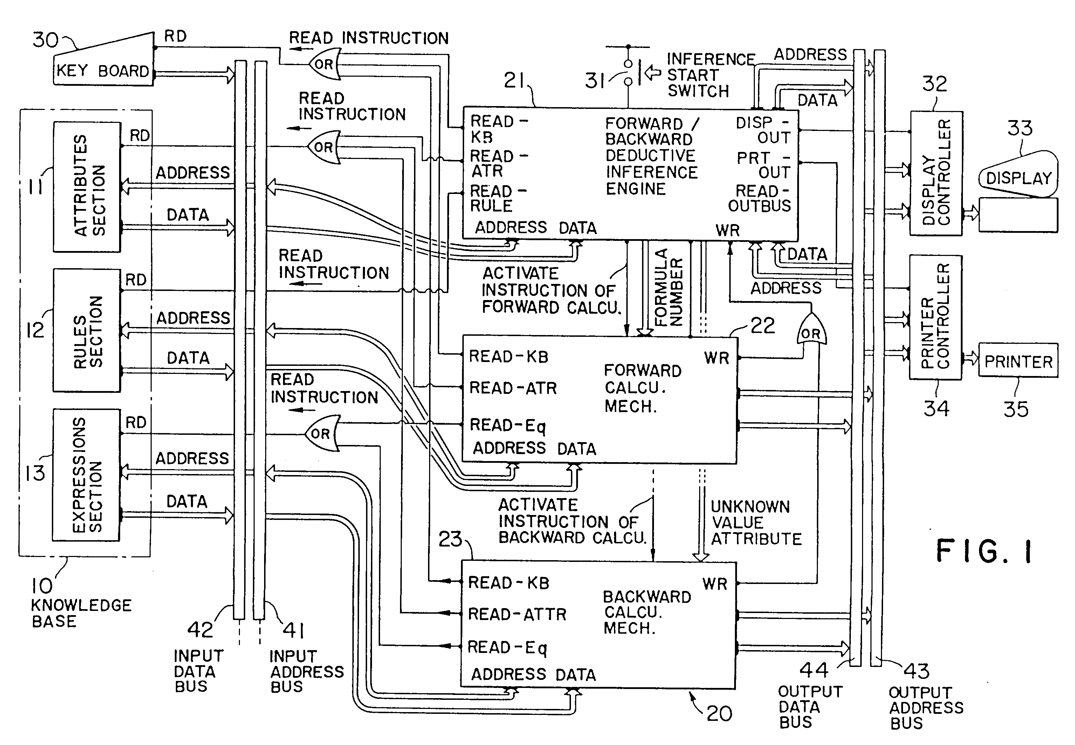

Fig. 1 shows an embodiment of an expert system. The expert system according to this embodiment comprises a knowledge base 10 including an attributes-section 11, a rules-section 12 and an expressions-section 13 and an inference engine 20 including a forward/backward deductive inference engine 21, a forward calculation mechanism 22 and a backward calculation mechanism 23. The inference engine 20 further includes a key board 30 for inputting data values, an inference start switch 31, a display controller 32, a display 33, a printer controller 34 and a printer 35. An input address bus 41, and input data bus 42, an output address bus 43 and an output data bus 44 are also provided for the transfer of data between these devices and engines.

The knowledge base 10 comprises a data base composed of memories such as RAMs and/or ROMs, the attributes-section 11 stores names and types of attributes, the rules-section 12 stores rules of deductive inference and the expression-section 13 stores forward/backward calculation formulae.

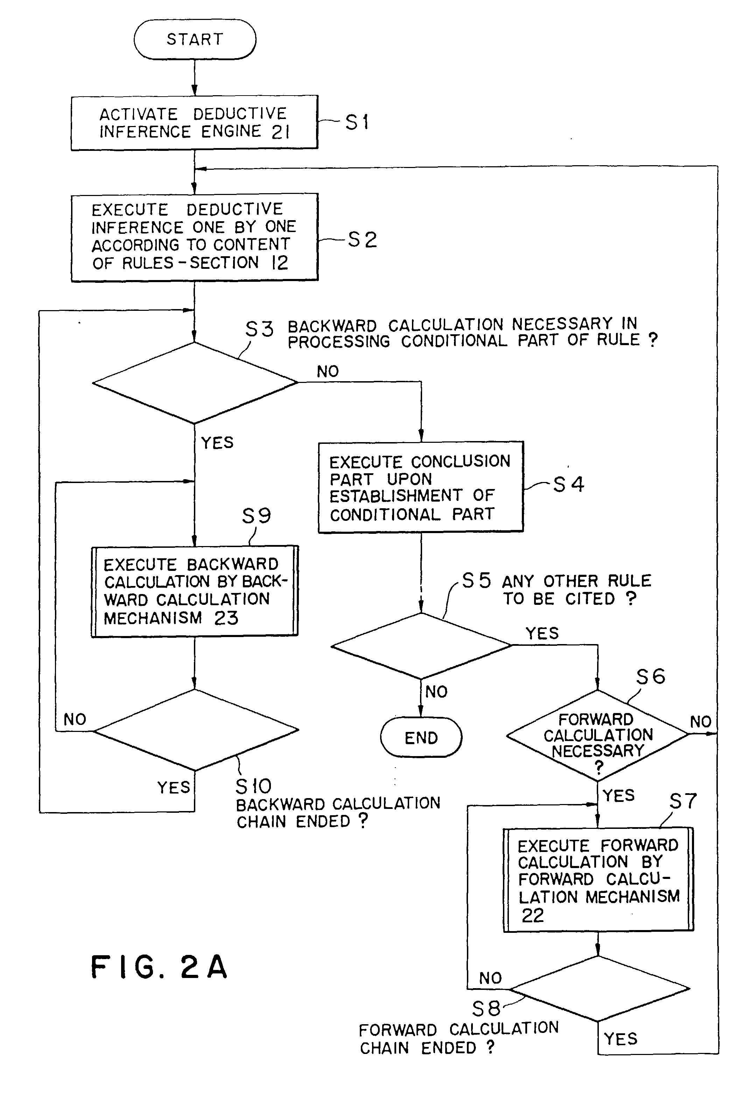

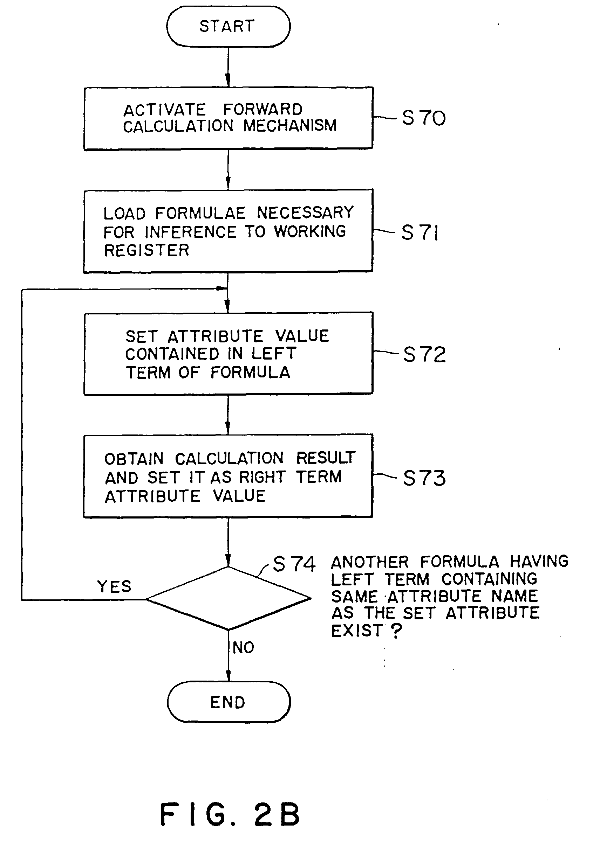

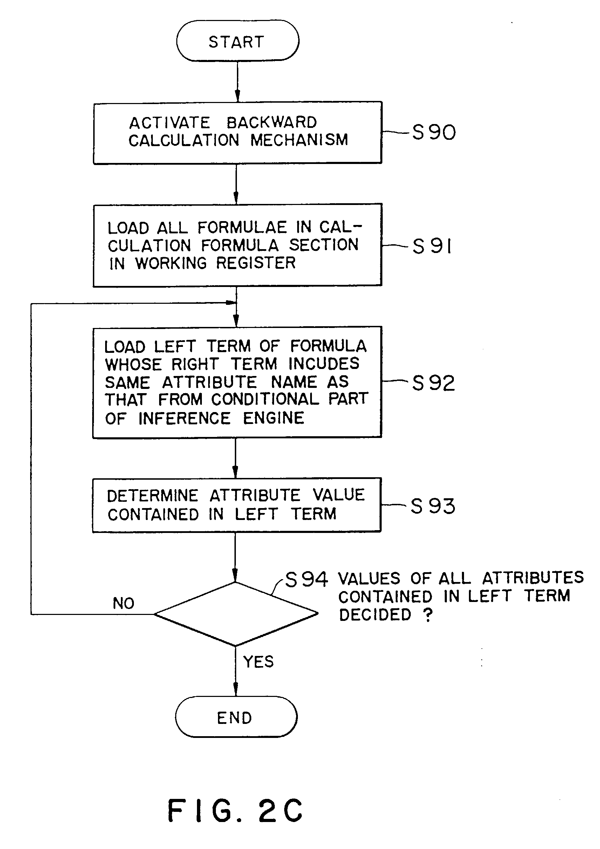

An operation of the system shown in Fig. 1 will be described with reference to flow charts shown in Fig. 2A, 2B and 2C. When an operator depresses the inference switch 31, the deductive inference engine 21 is activated (Step S1). The inference engine 21 accesses, first, the rules-section 12 of the knowledge base 10. The content thereof is transferred through the input address bus 41 and the input data bus 42 to the memory portion of the inference engine 21 and in accordance with upon the content transferred, a forward/backward inference is executed by the inference engine 21 according to a known algolithm (Step S2). At this time, upon demand, the inference engine 21 accesses the key board 30 to take data inputted thereto through the address bus 42 and the data bus 41 into the inference engine 21.

When a forward calculation becomes necessary in the course of the inference process, an instruction flag for forward calculation activation is provided to activate the forward calculation mechanism 22 (Step S3-S7). Upon activation of the forward calculation mechanism 22 (Step S70). the expressions-section 13 of the knowledge base 10 is first accessed. Then, a content (number of formula) of the expressions-section 13 is transferred to the memory portion of the calculation mechanism 22, which may comprise RAMs. Thereafter, the calculation mechanism 22 loads a formula having a formula number corresponding to the formula number transferred from the inference engine 21 to a working register for storing formula temporarily (Step S71). Then, a left side of that formula is loaded to a working register for temporarily storing a content of left side. Thereafter, attributes contained in the left side are picked up one by one and the attributes-section 11 is accessed for each of the attributes to check the values of the register in the memory of the attributes-section 11 showing whether or not a value of each attribute is determined by keyboard input. If the register value is a value indicating input from keyboard 30, then the calculation mechanism 22 accesses to the keyboard 30 to take the value input from the keyboard 30 and sets the value as a value of that attribute (Step S72).

When all of the attributes are contained in the left side in this manner, the calculation mechanism 22 drives an operation mechanism contained in itself to obtain a calculation result and sets the latter as a value of attribute of the right side (Step S73). Thus, the processing of the forward calculation mechanism for one formula is completed.

It is then checked by loading formula in the temporal formula storing register one by one whether or not there is any other formula whose right side contains the same attribute name as that whose value is determined for one formula. If there is, the forward calculation is executed for that formula (Step S8 and S7). If not, the forward calculation process is terminated and the forward calculation activation flag is dropped and the operation returns to processing in the deductive inference engine 21 (Step S8 and S2).

Attributes whose values are determined by this chain of forward calculation are cited again in a process for introducing values of attributes in the conditional portion of the rule for which the process is included in a subsequent deductive inference process, to decide whether or not the conditional portion of rule is established and whether or not the rule is established. When a backward calculation becomes necessary during the inference process, an instruction flag for activation of backward calculation is provided to activate the backward calculation mechanism 23 (Step S3 and S9).

The necessity of backward calculation occurs for obtaining a value of a calculation fomula when the rule conditional portion includes an unknown attribute which is declared according to the definition of the attribute declaration section as that "to be obtained from calculation result".

When the backward calculation is activated (Step S90), all of the formulae in the expressions-section 13 are loaded in the RAM of the calculation mechanism 23 (Step S91). Then, each of the formula is loaded in the working register for temporary formula storage and when any formula whose right side is the same as the attribute name transferred from the conditional portion of the inference engine is found, a left side of that formula is loaded into the working register for temporary left side content storage (Step S92). If there is any arrtibute in the attributes contained in the left side whose attribute value is unknown, it is input from the keyboard 30 to determine the attribute value (Step S93).

After values of all attributes contained in the left side, the backward calculation flag is dropped and the operation is returned to the processing of the Step S3.

After the processing in the inference engine 20 is completed, it goes to an auxiliary routine. The auxiliary routine includes a displaying on routine the display 33 and a printer output routine for the printer 35.

The operations of the attributes-section 11, the rules-section 12, the expressions-section 13, the deductive inference engine 21, the forward calculation mechanism 22 and the backward calculation mechanism 23 will be described in more detail with reference to a case where an electric insulation is diagnosed on a basis of an insulating resister value of an electric machine.

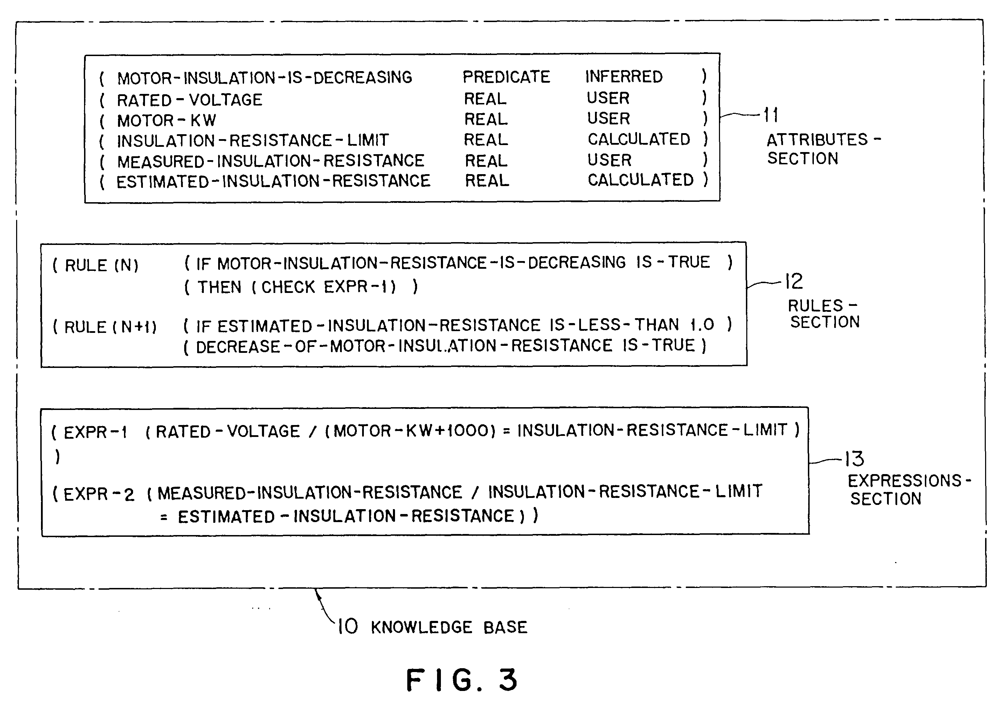

Fig. 3 shows an activation of forward calculation, a chain of forward calculations and a citation of calculation result in the rule.

The forward calculation according to calculation formula will be described with reference to Fig. 3. Fig. 3 shows an example of description of the knowledge base 10 which includes, in addition to the attributes-section 11 and the rules-section 12, the expressions-section 13 which is independent from them. With the latter section, it becomes possible to provide in the inference engine 20 a "chained calculation mechanism according to calculation formula" independently from the mechanism for chaining rules.

The operation will be described along an inference process performed by the inference engine 20.

It is assumed that, before the operation reaches the shown rule, it is confirmed that the insulating resistance tends to decrease with time.

In the rules-section 12, the conditional portion ("IF" portion) of RULE {N} : MOTOR-INSULATION-RESISTANCE-IS-DECREASING becomes "truth" and the conclusion portion ("THEN" portion) or the RULE {N} is activated.

Although the activation of the conclusion portion in the conventional system is

  1) to make calculation hypothesis described in the conclusion portion "truth",
  2) to output message by WRITE and
  3) to terminate inference by STOP,

etc., the activation in the present system is to enter into a "mechanism for chaining calculations of calculation formula" in the deductive inference engine 21 by describing function activating chaining of calculations according to formula in the expressions-section 13.

In the forward calculation, the number of formula which is calculated first has to be assigned. Therefore, as an argument of the forward calculation activating function "CHECK", "EXPR-1" (expression-1) is assigned.

When the expression which is first calculated in the forward calculation is assigned, the forward calculation mechanism 22 determines a value attribute contained in the right side of the calculation formula. The determination of the attribute value refers the attributes-section 11 similarly to the conventional inference engine to check whether the type of that attribute, i.e., the attribute value, is determined from a user input or from an inference or from a calculation result of the calculation formula.

In Fig. 3, the attribute type is described in a third column of the respective attribute list of the attributes-section 11 as "INFERRED", "USER" or "CALCULATED".

In the expressions-section 13, the attribute RATED-VOLTAGE, MOTOR-KW cited in the left side of the EXPR-1 has the attribute type "USER". Therefore, the value is determined by user input.

With the attribute value of the left side of the EXPR-1 determined, the calculation of the left side thereof is started.

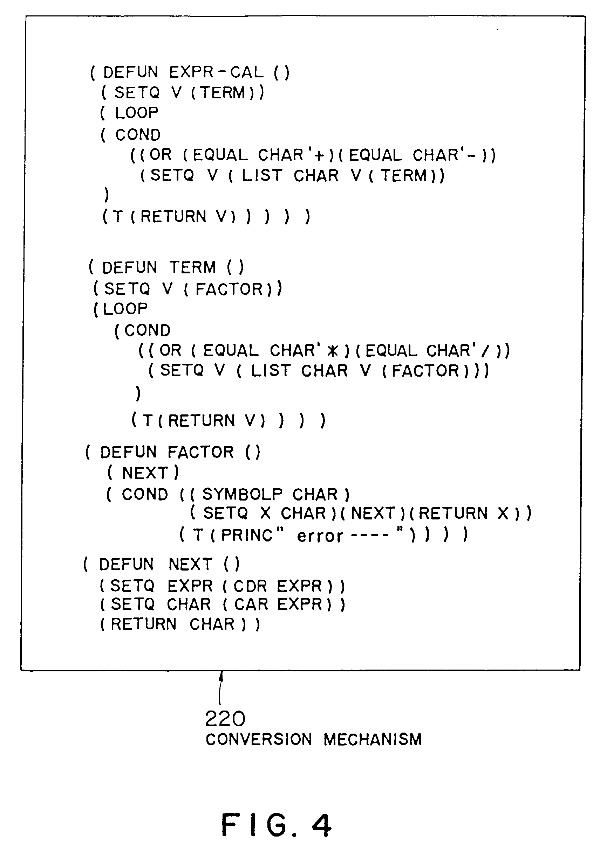

The forward calculation mechanism 22 uses such a conversion mechanism 220 as shown in Fig. 4 to convert the expression of the left side into a function (in this example, LISP function) for inference language.

A result from the conversion mechanism 220 in Fig. 4, for the left side of the EXPR-1, can be expressed by the LISP function as follow:

$$(/ \text{ RATED-VOLTAGE } (+\text{MOTOR-KW } 1000))$$

By providing attribute value to this function, the calculation result of the left side of the EXPR-1 is obtained as a value of the function.

With the calculation result, the calculation mechanism 22 sets the result as a value of attribute of the right side of the expression.

The right side or left side in the calculation mechanism 22 is distinguished according to a list before or after an equality "=" in a list of one calculation expression, for the EXPR-1, (RATED-VOLTAGE/(MOTOR-KW + 1000) = INSULATION-RESISTANCE-LIMIT), the list before the equality being recognized as left side and the list after the equality being recognized as right side.

When the calculation result of the EXPR-1 is obtained in this manner, the calculation mechanism 22 searches for any other expression than the EXPR-1 which includes in its left side the attribute INSULATION-RESISTANCE-LIMIT of the right side of the EXPR-1.

Since, in this case, the EXPR-2 in Fig. 3 includes in its left side INSULATION-RESISTANCE-LIMIT, the calculation mechanism 22 operates the EXPR-2.

In the EXPR-2, when a value of MEASURED-INSULATION-RESISTANCE is input by the user, a calculation result can be obtained through the same process as that for the EXPR-1.

When the calculation result of the EXPR-2 is obtained, the calculation mechanism 22 searches for any other expression which has in its left side the attribute of the calculation result "ESTIMATED-INSULATION-RESISTANCE". If there is no such expression, the calculation mechanism 22 terminates the chain of calculation and is returned to the inference process according to the rules.

In the ruled inference process, the deductive inference engine 21 looks RULE {N+1} in the rules-section 12. Since, although there is "ESTIMATED-INSULATION-RESISTANCE" in the conditional portion of RULE {N+1}, its attribute value has been calculated, a next processing of the conditional portion, that is "threshold value processing" of "IS-LESS-THAN", is performed according to the attribute value.

If this threshold value is satisfied, the hypothesis DECREASE-OF-MOTOR-INSULATION-RESISTANCE (state where insulating resistance is below a normal limit) of the conclusion portion of RULE {N+1} becomes "truth".

In the above description of the construction and operation of the forward calculation made with reference to Fig. 3, the inference process of the present invention is found typically in the process for obtaining, from the EXPR-1, the parameter INSULATION-RESISTANCE-LIMIT for judging whether or not the insulating resistance is abnormally decreased. That is, this example is to obtain a parameter featuring a fault from the expression.

By changing content of the expression, it can be easily modified to describe a construction of fault phenomenally.

For example, assuming a fault which makes Kirchhoff's first law unsatisfactory, the calculation mechanism 22 of the present invention can infer an existence of the fault construction in question when an absolute value of $\delta$ in a preliminarily prepared expression

$$\Sigma V_I = \delta$$

is not less than a certain value.

Although not shown in detail, it is clear that the forward calculation mechanism is effective in calculating indices representing advantage and loss in plan and design problems and in executing a next inference on the basis of the results of calculation.

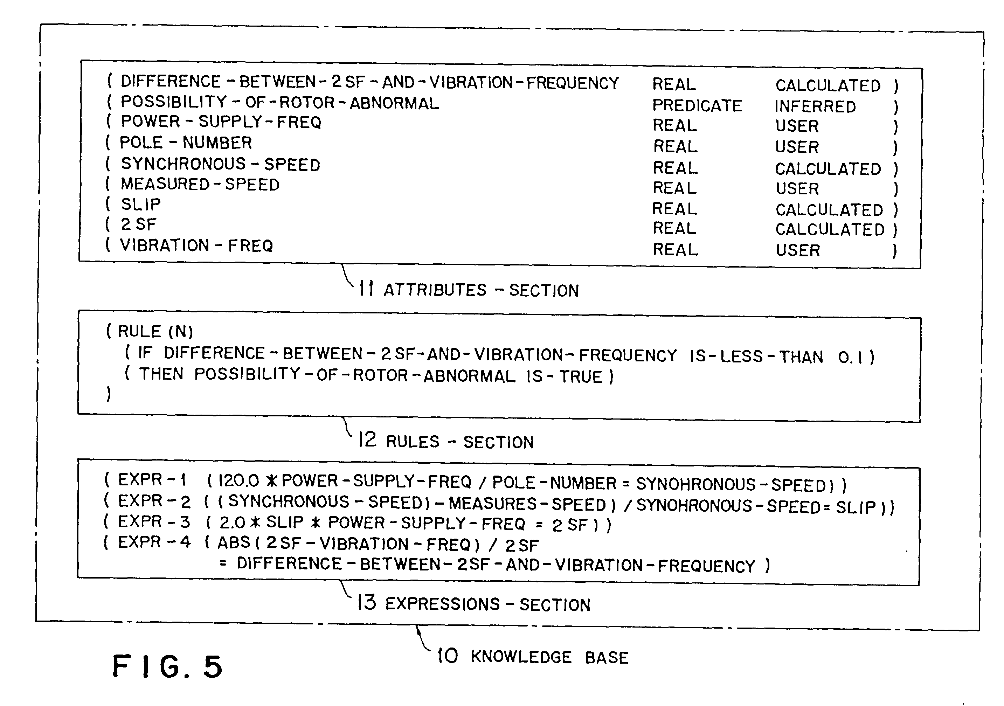

Fig. 5 shows an activation of backward calculation, a backward calculation chain and a citation of calculation results in the rules. Fig. 5 exemplifies a knowledge base of a check portion for checking in fault diagnosis for whether or not there is an abnormality of a rotor of an induction motor.

When there is an abnormality in a rotor of an induction motor, a vibration occurs whose frequency (2SF) is twice a product of a source frequency F and a "slip" S which is a difference between a rotation speed of the rotor when synchronized with the source frequency and an actual rotation speed.

The knowledge base 10 in Fig. 5 checks whether a measured vibration frequency is coincident with 2SF. A construction and operation of the backward calculation mechanism 23 will be described with reference to the knowledge base 10 shown in Fig. 5.

It is assumed that the inference engine has been executed according to rules and the operation reaches RULE {N} in the rules-section 12 during a search of a source of fault.

There is an attribute DIFFERENCE-BETWEEN-2SF-AND-VIBRATION-FREQUENCY in a conditional portion of RULE {N} . In order to determine an attribute value of this attribute, the deductive inference engine 21 first refers to the attributes-section 11 to check the type of attribute. Since, in this case, the attribute type is CALCULATED as shown, the backward calculation mechanism 23 is activated to determine the attribute value. The backward calculation mechanism 23 searches among expressions in the expressions-section 13 for one having right side DIFFERENCE-BETWEEN-2SF-AND-VIBRATION-FREQUENCY. As a result, the fourth expression EXPR-4 is found.

Then, in order to obtain a result of the fourth expression, the left side is calculated. In order to calculate the left side, an attribute value thereof is necessary. Therefore, the attributes-section 11 is referred to determine the attribute value. As a result, the attribute "VIBRATION-FREQ" is determined in its value by means of a user input since the attribute type thereof is "USER". On the other hand, since the attribute type of the attribute 2SF is "CALCULATED", the backward calculation mechanism 23 is activated again to search for any other expression whose right side has the attribute 2SF. As a result, the third expression EXPR-3 is found in the expressions-section 13.

The left side of the third expression includes one ("SLIP") having an attribute type CALCULATED and a further backward calculation is performed.

By repeating a similar backward calculation chain until the first expression EXPR-1, all attribute values in the backward calculation chain from the fourth expression to the first expression are determined and so there is no further backward calculation.

The backward calculation mechanism 23 calculates the left side of the expressions from the first expression in sequence by means of the conversion mechanism 220 shown in Fig. 4 and repeats the process of setting them in values of the right side, resulting in the attribute value of the attribute described in the right side of the fourth expression.

Since the attribute value on which the backward calculation mechanism 23 is activated, the backward calculation by the backward calculation mechanism 23 is terminated and returned to the RULE {N} by which the backward calculation mechanism 23 is activated.

In RULE {N} , since the attribute value of the conditional portion is given, "threshold value" processing of "IS-LESS-THAN" shown in the conditional portion is performed.

If the result of the backward calculation satisfies this threshold value, the conclusion portion of RULE {N} is activated, so that POSSIBILITY-OF-ROTOR-ABNORMAL becomes "truth".

In summary, according to the construction and operation of the backward calculation mechanism 23 shown in Fig. 5, when there is an attribute having its type "CALCULATED" in the conditional portion of the rules, the backward calculation is autonatically activated and chains the operation until the attribute value thereof is obtained. When the attribute value is obtained, it is returned to the original rule and continues the inference according to the rule.

This example clarifies that the backward calculation mechanism 23 is effective in realizing the process of checking the construction of problem by referring expressions describing the fault construction phenomenally and in finally improving accuracy of inference.

It is clear from the description of the example shown in Fig. 5 that the backward calculation mechanism 23 is effective in calculating the parameters representing features of faults in fault diagnosis or in calculating indices representing advantage and loss in design and plan problems and that it improves the inference capability by providing rules for citing these parameters and indices.

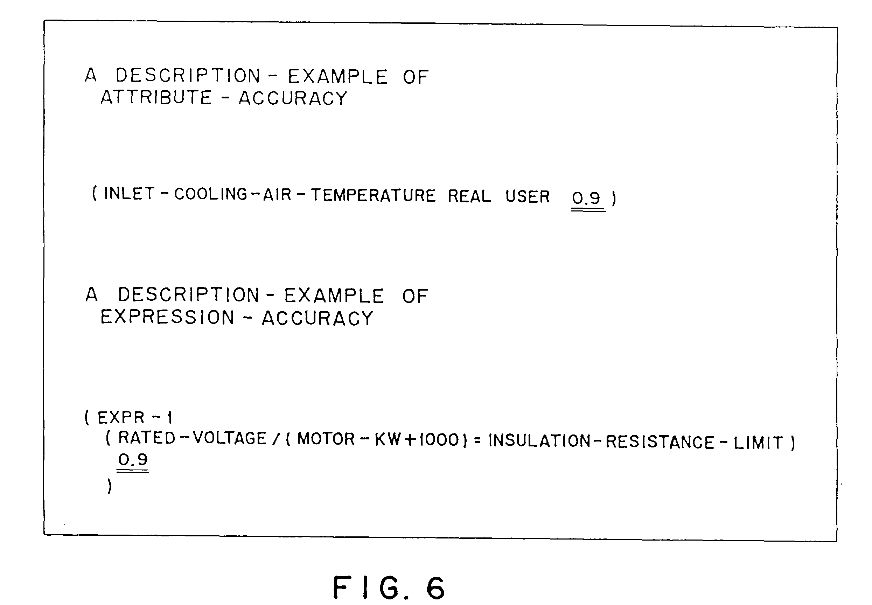

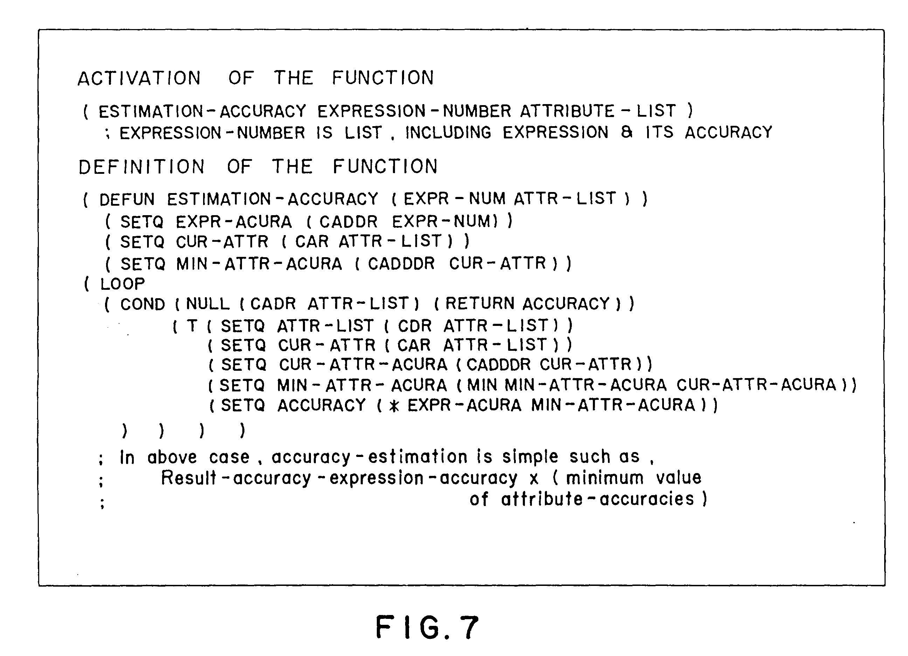

Figs. 6 and 7 show an example of a calculation mechanism for the accuracy of calculation results and which is necessary for reflecting the accuracy of calculation results to the inference according to the rule in citing expressions by the forward and backward calculations.

As is clear, the calculation of calculation accuracy is performed by a method (see Fig. 7) in which a function for introducing the accuracy of calculation result upon definition (in the attributes-section) of the attribute accuracy cited in expressions and definition of accuracy of the expressions (see Fig. 6) is used.

The accuracy definition of attribute cited in the expressions may be performed by a user when the type of the attribute is user input, provided that the technical level of the user is sufficiently high.

Although in Fig. 6 the function for introducing the accuracy of calculation results is a product of "INSULATION-RESISTANCE-LIMIT" and "accuracy of expression" (=0.9) for simplicity of explanation, it is possible to use a function whose accuracy is higher.

When the calculation accuracy is obtained by this mechanism, it is clear that the accuracy of calculation according to the expression can be reflected to a calculation process of reliability of concluded phenomenon calculated conventionally through a chain of inferences, by using this accuracy as a reliability of conditional phenomenon in the inference. Therefore, in an expert system in which the reliability of the conclusion is important, it is possible to obtain a more accurate final conclusion by reflecting the accuracy of the calculation result according to the expressions to the inference process, and thus, the inference function is improved totally.

The attributes-section 11, the rules-section 12, the expressions-section 13, the deductive inference engine 21, the forward calculation mechanism 22 and the backward calculation mechanism 23 of the expert system according to the present invention are embodied generally as mentioned below.

The determination of value of an attribute (variable) described in the left side of an expression is performed in the same way as the determination of the attribute value of the conditional portion in the rule expression except the following case.

In the rule expression, although there is a case where the attribute value is determined from a result of inference according to the rule, there is provided a case where an attribute value is determined from a calculation result in a case of calculation of expressions, correspondingly thereto. Although, attributes are declared in the attributes-section by attribute types for determining attribute values thereof, it is made possible in inference to declare the type in which the attribute value is determined from the calculation results, correspondingly with the declaration of the type in which the attribute value is determined from inference result.

In the example shown in Fig. 3, the third term "calculated" in the list parenthesized in the declaration section 2 is the declaration that it is obtained from calculation result.

When an attribute value of an arttibute put in the left side of an expression is obtained in this manner, it becomes a calculation step for calculating the left side. Usually, as the language describing the dedutive inference engine 21, a conversion mechanism for converting a descriptive format which is usually used to describe a mathematical expression into a format for an inference language such as LISP since it is impossible to use a mathematical format.

An example of this conversion mechanism is shown in Fig. 4 by using LISP.

Although, in this example, only addition, subtraction, multiplicaiton and division are performed for simplicity of explanation, cases are easily constructed in which exponentials, parenthesis and known functions of sin, cos are used.

Next, a mechanism for chaining expressions in such a way that a calculation result is used a left side of another expression and so on is provided.

The mechanism is provided with a forward and backward calculation mechanism which uses an algorithm corresponding to forward and backward inferences of a production system.

The foward calculation mechanism 22 serves to obtain a value of an attribute of a left side of an expression, first, and then performs a calculation, a result of which is used as a value of a right side thereof.

The backward calculation mechanism 23 goes back and performs calculations of expressions according to an algorithm corresponding to the backward inference, in a case where, when, during an execution of rules-section for deductive inference, a specific rule is activated, there is, in attributes referring in the conditional portion of rule, an attribute whose value is obtained from a calculation result in an expressions section, or there is an attribute in attributes placed in the left side of the expression whose value is obtained from a calculation result of a different expression.

The forward calculation mechanism 22 is used for chaining forward calculations and the backward calculation mechanism 23 is used for chaining backward calculations.

The chain of forward calculations is repeated until attributes already calculated cannot be found in other expressions. The backward inference chain is repeated until there is no attribute in the right side which is obtained from a calculation result of another expression.

The descriptions in the inference engines of the forward calculation mechanism 22 and the backward calculation mechanism 23 can be realized for those corresponding to the inference according to rules of the conventional expert system except the expression conversion processing portion.

The activation of the forward calculation is performed by a function whose argument is the number of the expression for starting the calculation chain of the conclusion portion of the rule expression as shown by "CHECK EXPR-1" in Fig. 3 (in the shown example, "CHECK").

After the forward calculation chain is terminated, there is escape from the expressions section 13 to look for the next rule to that by which the forward calculation is activated.

The backward calculation is activated to obtain an attribute value when, during an execution of inference according to rule, there is an attribute in attributes being referred by the conditional portion of the rule which has an attribute value to be obtained from a calculation result in the expressions-section 13, that is, when, in the example shown in Fig. 5, there is an attribute in the attribute being referred by the conditional portion of the rule which has an attribute type declared as "CALCULATED" in the attributes-section 11.

When the chain of backward calculations terminates and the value of attribute by which the backward calculation is activated is obtained, the operation is escaped from the expressions-section 13 and is returned to the rule by which the backward calculation is activated.

In an inference process in which reliability of inference is important, it is necessary, in addition to the processing of reliability in the inference process according to rule, to reflect an evaluation of accuracy of a result obtained in the calculation process in the expressions-section 13 to the reliability of a conclusion of inference according to rule.

In such case, in the expression calculation process, it is necessary to define the accuracy of an expression itself together with accuracy of attributes cited for calculation, that is, accuracy of measured data or reliability of search data, etc., as shown in Fig. 6. For the estimated value of characteristics or parameter obtained as a result of a certain phenomenon, an analysis model is assumed tacitly and the accuracy of expression is caused by an approximation of the analysis model to a real phenomenon.

The accuracy of attribute which is caused by calculation can be derived by the deductive inference engine 21 from the knowledge base 10 by defining it additionally to respective expressions as shown in Fig. 6.

By preparing a function such as shown in Fig. 7 which has, as arguments, the accuracy of attribute derived and accuracy of expression, it is possible to obtain the accuracy of the calculation result. It should be noted that Fig. 7 is described with the inference language LISP.

In a case where an operation is executed by a chain of forward calculations while evaluating the calculation accuracy, the every termination of expression is checked for whether or not the calculation accuracy reaches a threshold value. If it does not reach the threshold value, calculation is interrupted and operation is returned to the rules-section 12, so that inference according to rules can be restarted.

In this case, the calculation result which does not reach the predetermined accuracy is made not a value of accuracy but a value "NIL" so that it can be clarified that the calculation result was not obtained.

Furthermore, by making a result of another expression whose left side uses the attribute whose calculation result was not obtained, also "NIL", it is possible to make the results of forward calculation chain "NIL" successively, with the final calculation result of the chain being "NIL".

Since the conditional portion of rule which uses the final calculation result is returned to "NIL" by this process, the conditional portion of the rule corresponding to the calculation result becomes unsatisfactory, so that the fact that calculation result was not obtained is reflected to the inference according to rule.

With such a mechanism, it is possible to realize an inference process which more closely approximates that of an expert and, by eliminating meaningless low accuracy calculations, the efficiency of inference processing can be improved.

In a case where, during the execution of backward calculation chain, there is an attribute whose accuracy of attribute value is low and where the accuracy of the calculation result to be evaluated does not reach a necessary level defined preliminarily in the knowledge base even if an error of another attribute value in a left side of an expression including the attribute is zero, it is possible to make the calculation result NIL and to interrupt the backward calculation.

Furthermore, by making all results of other expressions using the attribute having NIL calculation result NIL, it is possible to make the conditional portion of the corresponding portion of the rule by which the backward calculation is activated unsatisfactory so that the fact that the accuracy of attribute to be obtained is lowered by the existence of data whose accuracy is low can be reflected in the rule.

With such a mechanism, an inference process which more closely approximates the expert can be obtained and, by eliminating low accuracy and meaningless calculations, the efficiency of inference processing can be improved.

As a modificaiton of description of expression, the following means is prepared.

When attribute name is determined by taking an actualization of knowledge into consideration, the order of calculation of expression, etc., may become unclear because the number of characters of the attribute name is large.

In order to solve this problem, it may be possible to describe an expression with a temporary attribute name whose number of characters is small and provide a portion describing a relation between the temporary attribute name and the original name whose number of character is large inevitably to description portion of the expression. In such case, the original long attribute name is declared in the attributes-section 11. Furthermore, on the side of the deductive inference engine 21, a process is added by which the relation between the temporal name and the original name is referred so that an expression using the original attribute name is produced internally.

The EXPR-1 in Fig. 3 can be rewritten according to the above mentioned scheme as follows:

```
(EXPR-1
 (V/(KW + 1000) = Ri - limit))
 (WHERE(V              :RATED-VOLTAGE)
       (KW             :MOTOR-KW)
       (Ri - limit    :INSULATION-RESISTANCE - LIMIT))
```

Since the left side of the above expression is a standardized limit of insulating resistance according to domestic and foreign standards of electric machine, the temporary name is described using symbols used in these standards.

By describing temporary attribute names used in expression with known symbols used in standards, handbooks, or known text books, etc., and attaching meanings thereof next, the ability of expression is further improved.

In order to clarify knowledge description of the calculation formula, the following means is provided.

Since the attribute values used in a calculation usually have units when the calculation is for technical calculation or the calculation is evaluation of efficiency and/or loss, etc., the values cannot be determined without their units.

Therefore, the attributes-section 11 is made capable of declaring units for attributes to be used in the calculation.

The unit declaration is possible by adding a unit description to a list of attributes such as follow:

For EXPR-1 in Fig. 3, for example,

```
(RATED-VOLTAGE REAL USER "VOLT")
(MOTOR-KW REAL "KW")
(INSULATION-RESISTANCE-LIMIT REAL CALCULATED
("MEG-OHM" "MΩ "))
```

The third example above is one in which a plurality of descriptions are recognized by this knowledge for identical unit.

With such unit declaration, the meaning of calculation formula as knowledge becomes more clear, and clarifies a difference from calculation procedure program with conventional language.

For a calculation processing as the deductive inference engine 21, the unit declaration (standard) has the following merits and improves diagonostic capability to a user.

(1) When a user inputs numerical values, a unit confirmation message is automatically output.
(2) Units can be automatically added at an explanation of calculation result as one of the inference explanation mechanism.
(3) By preparing an inference engine such that a user is asked for not only numerical values but also their units, it is possible to more closely approximate "Q AND A" (=QUESTION AND ANSWER) to the inference engine to a real one.

When the user can input units, it is necessary to define a plurality of descriptions for an identical content, such as in the third example above.

In such case, although there is no meaning in clarifying calculation formula, the conversation ability between the engine and the user is improved with the merits (1) to (3).

In order to make the meanings of calculation formula as knowledge description more clear, the following means is prepared.

For the technical calculation or evaluation of efficiency and loss, etc., the value of the attribute to be used in calculation is tacitly assumed as fallen within a certain range. A value outside this range can be interpreted as that it has wrong unit or the meaning of its attribute is erroneously interpreted. Therefore, the "value within a certain range" is considered as a portion of the knowledge of the calculation formula. Thus, in the attribute declaration, a description defining the above range is provided.

It is possible by adding the above range in the attribute list. Such addition may be performed in such various ways as follows:

(1) (RATED-VOLTAGE REAL USER "Volt" ("MIN = "220 "MAX ="1200))
(2) (MEASURED-INSULATION-RESISTANCE REAL USER "MEG-OHM" (TYPICAL" 1.0))

(1) is to define the range and (2) is to show a typical value thereof which `is added to the attribute list or included in the inference engine to define an upper and a lower limits thereof by "ratio" or "difference" therebetween.

The typical value means an average value (expected value) when its attribute has a normal distribution between the upper and the lower limits or a value the possibility of occurence of which is highest for other distributions.

In the field of design and plan problem and fault diagnosis etc., in which the value of attribute is important, not only the conventionally-used "DEFAULT VALUE KNOWLEDGE" but also "RANGE THE ATTRIBUTE VALUE CAN TAKE" are important knowledge in that field.

According to the above mentioned method, "RANGE OF THE ATTRIBUTE VALUE CAN TAKE" is easily described and attributes to an improvement of description ability of knowledge in the special field.

When an input value input by the user is out of this range, it is possible to construct the inference engine such that a suitable message is output to recommend the user to input again. With this, the number of rules can be minimized and the certainty of inference can be improved.

Dependent upon calculation process environment in software and/or hardware, there may be a case where economical pressure caused by reconstruction of inference engine for realizing the effect of the present invention becomes more important than the problems of increase of processing time and complicated construction of the inference engine.

In such case, although the problems of processing time and complicated construction are not solved, it is possible to reconstruct the inference engine of the present invention by merely adding the following construction to the existing inference engine.

That is, there are provided two knowledge bases describing identical content with different description formats. One of them serves as "External knowledge base" to which a designer and a user of the knowledge bases can contact directly and uses a description format characterized by having the same "deductive inference section", "expressions-section" and "attributes-section" as those mentioned previously and the other uses the existing description format including, for example, "frame" and "deductive inference engine" as an "internal knowledge base" internally automatically produced for execution of inference process by the inference engine.

In this case, it is possible to add, to the existing inference engine, a mechanism (a kind of translation mechanism) for automatically converting the description format of "external knowledge base" into that of "internal knowledge base".

In such a case, since the combination of the automatic format conversion mechanism and the existing inference engine performs the operation of the present invention mentioned previously and, for the knowledge base designer

EP 0 788 049 B1

or the user who directly contact with only the "external knowledge", the inference engine construction seems to exist, the object of the present invention except the problems of processing time and complexity of construction can be achieved by this modified construction.

With the simple and clear construction according to the present invention, a calculation process of intermediate indices of efficiency and loss of design and plan which is performed by using several formula in a chain during deductive inference, check the process of phenomenal structure in fault detection and calculation process of parameters representing the features of fault are performed efficiently by only the inference engine.

Furthermore, since the expressions-section can describe attributes not by symbols but by clear words or sentences, the knowledge description ability of the calculation formula itself is improved compared with description with conventional procedure language such as FORTRAN, in the sense that meaning expressed by calculation formula is clarified phenomenaly.

Since the expressions-section is a kind of collection of formulae whose description format is approximated to memory format of an expert or description format technical materials, a knowledge engineer can easily obtain knowledge and a specialist can easily produce a knowledge base by himself, so that the adaptation of the expert system is improved.

Since the attributes-section uses description format close to a list of technical term definitions used in technical articles including thesis and standard, etc., by those specialists, a knowledge engineer can also easily obtain knowledge and a specialist can easily produce knowledge base by himself. Therefore, the adaptation of expert system is improved.

With these advantages, it is possible to improve the inference engine of expert system and to improve knowledge description ability of knowledge base therefor, resulting in a further improvement of problem solving ability in design, planning problems and diagnosis problems, etc.

**Claims**

1. An industrial expert system for use in designing a plant system or devices thereof and in fault detection, comprising a knowledge base (10) including a rules-section (12) for describing deductive inference rules, an expressions-section (13) for describing a calculation formula of equality with either a right side or left side being a simple term having a value and the other side being polynomial including known functions and an attributes-section (11) for declaring the nature and value of each of attributes cited in calculation and inference and for declaring parameters for controlling communication between a process of deductive inference and a calculation process according to calculation formula; and a deductive inference engine (21) for performing a deductive inference on the basis of the rules, calculation formulae and the attributes stored in said knowledge base and being described in a description format, characterized in that there is provided a second knowledge base describing identical content with different description formats, said first knowledge base (10) serving as external knowledge base to which a designer and a user of the industrial expert system can contact directly and the second serving as internal knowledge base and that said inference engine (21) comprises a mechanism for automatically converting the description format of said first knowledge base (10) into that of said second knowledge base.

2. The system claimed in claim 1, further comprising a forward calculation mechanism (22) for obtaining a calculation result of values of the respective attributes cited in said polynomial, and a backward calculation mechanism (23) for searching back to a calculation formula when a calculation result of said calculation formula becomes necessary during an execution of deductive inference and for calculating said polynomial thereof to obtain the result.

3. The system claimed in claim 2, wherein a plurality of calculation formulae are described in parallel in said expressions-section and, when an attribute obtained as a result of calculation of one of said calculation formulae is included in said polynomial of another calculation formula in said section, an execution of a chain of forward calculations is made possible by obtaining the calculation results of all of said calculation formulae having polynomials including said attribute.

4. The system claimed in claim 2, wherein a plurality of calculation formulae are described in parallel in said expressions-section and when, during a calculation of said polynomial of one of said calculation formulae, an attribute value to be obtained from a calculation result of said one calculation formula becomes necessary and, in order to obtain said attribute value, a backward calculation is performed by calculation of said polynomial of said calculation formula and when at least one of attributes in said polynomials is given as a calculation result of another calculation formula in said expressions-section, an execution of a backward calculation chain is enabled by activating the backward calculation for all attributes obtainable from said other calculation formula.

11

**5.** The system claimed in claim 2, wherein a process of forward calculation chain is activated by a processing of a deductive inference chain by describing, in a conclusion portion of a rule describing a deductive inference, a function by which a chain of calculations is activated from a calculation formula assigned by an argument corresponding to the number of said calculation formula and wherein, after said forward calculation chain completes, it is returned to the process of deductive inference chain by inferring another rule next to said rule by which said forward calculation was activated.

**6.** The system claimed in claim 2, further comprising a section for declaring attribute types of all attributes cited in said deductive inference and formula calculation processes as having attribute values input by a user, obtained from an inference as well as from a calculation result of said calculation formula, and wherein, in attribute type check process in obtaining attribute values of said attributes cited in a conditional portion of the deductive inference, the backward calculation chain is activated when it is one to be defined by calculation result.

**7.** The system claimed in claim 2, wherein a process for obtaining an accuracy of a calculation result by defining accuracy of attribute value of attributes cited in said calculation formulae in said polynomial, which is based on the accuracy of measurement or check, by said attributes-section or user input, etc., and defining additionally approximations to truth phenomenon or observation as accuracy of said calculation formula to said respective calculation formulae and by executing a constant function having arguments corresponding to an accuracy of said attribute and accuracy of calculation formula is executed additionally to the process for obtaining the calculation result itself, so that the accuracy of a calculation result is reflected to a certainty of conclusion of the rule citing the calculation result.

**8.** The system claimed in claim 7, further comprising a mechanism for checking, at every time when a calculation result is obtained for one of said calculation formulae during an execution of the forward calculation chain, whether or not said calculation result satisfies an accuracy necessary in inference, and for interrupting said calculation chain and returning to the deductive inference process when said calculation result does not satisfy said necessary accuracy.

**9.** The system claimed in claim 8, wherein, when said check mechanism decides that said calculation result does not satisfy said necessary accuracy, during an execution of backward calculation chain, if there is attribute having low accuracy in attributes inputted by the user or cited from internal and external data bases of the knowledge base, the backward calculation chain is interrupted even if other attributes cited in that calculation chain have ideal accuracy and returns to the deductive inference process.

**10.** The system claimed in claim 1, further comprising a portion for defining a unit of a value of attribute cited in calculation and a range in which the value is fallen, to make a background knowledge of calculation formula clearer and to enable an arbitrary automatic display of its unit.

**Patentansprüche**

**1.** Industrielles Expertensystem zur Verwendung bei der Konzeption eines Anlagensystems oder Bestandteilen hiervon und bei der Fehlerdetektion, welches umfaßt:

Eine Wissensbasis (10), die eine Regelsektion (12) zum Beschreiben von Regeln für deduktive Folgerungen, eine Ausdruckssektion (13) zum Beschreiben einer Gleichungsberechnungsformel, bei der entweder eine rechte Seite oder eine linke Seite ein einfacher Ausdruck ist, der einen Wert aufweist, und die andere Seite ein Polynom ist, das bekannte Funktionen enthält, und eine Attributsektion (11) zum Deklarieren der Art und des Werts jedes Attributs enthält, welches in der Berechnung und der Folgerung genannt wird, und zum Deklarieren von Parametern zum Steuern der Kommunikation zwischen einem Prozeß der deduktiven Folgerung und einem Berechnungsprozeß gemäß der Berechnungsformel; und
eine deduktive Interferenzmaschine (21) zum Durchführen einer deduktiven Folgerung auf der Grundlage der Regeln, Berechnungsformeln und der Attribute, die in der Wissensbasis gespeichert und in einem Beschreibungsformat beschrieben sind,

dadurch gekennzeichnet, daß

eine zweite Wissensbasis zur Verfügung gestellt ist, die einen identischen Inhalt mit unterschiedlichen Be-

**EP 0 788 049 B1**

schreibungsformaten beschreibt, wobei die erste Wissensbasis (10) als eine externe Wissensbasis dient, mit der ein Konstrukteur und ein Verwender des industriellen Expertensystems direkt in Kontakt treten kann, und wobei die zweite als interne Wissensbasis dient, und dadurch, daß

die Inteferenz-Maschine (21) einen Mechanismus zur automatischen Konvertierung des Beschreibungsformats der ersten Wissensbasis (10) in das der zweiten Wissensbasis umfaßt.

2. System nach Anspruch 1, das ferner einen Vorwärtsberechnungsmechanismus (22) zum Gewinnen eines Berechnungsergebnisses von Werten der zugehörigen Attribute, die in dem Polynom genannt sind, und einen Rückwärtsberechnungsmechanismus (23) zum Suchen einer Berechnungsformel in Rückwärtsrichtung umfaßt, wenn ein Berechnungsergebnis der Berechnungsformel während der Ausführung einer deduktiven Folgerung notwendig wird, und zum Berechnen dessen Polynoms, um ein Ergebnis zu erhalten.

3. System nach Anspruch 2, wobei mehrere Berechnungsformeln parallel in der Ausdruckssektion beschrieben sind, und wobei, wenn ein Attribut, das als Ergebnis einer Berechnung einer der Berechnungsformeln gewonnen wird, in dem Polynom einer anderen Berechnungsformel in diesem Bereich enthalten ist, eine Kette von Vorwärtsberechnungen durch das Gewinnen der Berechnungsergebnisse aller Berechnungsformeln, die die Attribute enthaltenden Polynome aufweisen, möglich gemacht wird.

4. System nach Anspruch 2, wobei mehrere Berechnungsformeln parallel in der Ausdruckssektion beschrieben sind und wobei, wenn während einer Berechnung des Polynoms einer der Berechnungsformeln ein Attributwert, der aus einem Berechnungsergebnis der einen Berechnungsformel gewonnen werden muß, notwendig wird und, um den Attributwert zu gewinnen, eine Rückwärtsberechnung durch die Berechnung des Polynoms der Berechnungsformel durchgeführt wird und wenn wenigstens eins der Attribute in den Polynomen als Berechnungsergebnis einer anderen Berechnungsformel in der Ausdruckssektion gegeben ist, eine Ausführung einer Rückwärtsberechnungskette für alle Attribute, die von der anderen Berechnungsformel gewonnen werden können, durch Aktivierung der Rückwärtsberechnung ermöglicht wird.

5. System nach Anspruch 2, wobei ein Prozeß einer Vorwärtsberechnungskette durch das Verarbeiten einer deduktiven Folgerungskette aktiviert wird, indem in einem Folgerungsbereich einer Regel, die eine deduktive Folgerung beschreibt, eine Funktion beschrieben wird, durch die eine Kette von Berechnung ausgehend von einer Berechnungformel eingeleitet wird, die durch ein Argument bezeichnet ist, das der Nummer der Kalkulationsformel entspricht, und wobei es, nachdem diese Vorwärtskettenberechnung abgeschlossen ist, zu dem Prozeß der deduktiven Folgerungskette durch Folgern einer anderen Regel nach der Regel, durch welche die Vorwärtsberechnung aktiviert worden ist, zurückgeführt wird.

6. System nach Anspruch 2, das ferner eine Sektion zum Deklarieren von Attributtypen aller Attribute, welche in dem deduktiven Folgerungs- und Formelberechnungsprozeß auftreten, als solche, die Attributwerte aufweisen, umfaßt, die von einem Benutzer eingegeben werden, aus einer Folgerung gewonnen werden oder aus einem Berechnungsergebnis der Berechnungsformel gewonnen werden, und wobei in einem Attributtypprüfungsprozeß zum Gewinnen der Attributwerte der Attribute, die in einem Bedingungsbereich der deduktiven Folgerung auftreten, die Rückwärtsberechnungskette aktiviert ist, wenn es einer ist, der durch ein Berechnungsergebnis definiert ist.

7. System nach Anspruch 2, wobei ein Prozeß zum Bestimmen einer Genauigkeit eines Berechnungsergebnisses durch ein Definieren eine Genauigkeit von Attributwerten der Attribute, die in den Berechnungsformeln des Polynoms genannt werden, das auf der Genauigkeit einer Messung oder einer Überprüfung durch die Attributsektion oder eine Benutzereingabe etc. basiert, und zum Definieren von zusätzlichen Approximationen von Wahrheitsphänomenen oder Beobachtungen als Genauigkeit der Berechnungsformel bezüglich der entsprechenden Berechnungsformeln und durch Ausführen einer konstanten Funktion, die Argumente aufweist, die einer Genauigkeit der Attribute und einer Genauigkeit der Berechnungsformel entspricht, zusätzlich zu dem Prozeß zum Gewinnen des Berechnungsergebnisses selbst durchgeführt wird, so daß die Genauigkeit eines Berechnungsergebnisses in einer Zuverlässigkeit der Schlußfolgerung der Regel, in der das Berechnungsergebnis auftritt, wiedergespiegelt wird.

8. System nach Anspruch 7, das ferner einen Mechanismus zum Überprüfen, ob das Berechnungsergebnis eine Genauigkeit zufriedenstellend erfüllt, die für die Folgerung notwendig ist, erfüllt oder nicht, jedes Mal, wenn ein Berechnungsergebnis für eine der Berechnungsformeln während der Ausführung der Vorwärtsberechnungskette gewonnen wird, und zum Unterbrechen der Berechnungskette und zum Rückführen zu dem deduktiven Folgerungsprozeß, wenn das Berechnungsergebnis nicht die notwendige Genauigkeit erfüllt, umfaßt.

**13**

9. System nach Anspruch 8, wobei, wenn der Überprüfungsmechanismus während einer Ausführung der Rückwärtsberechnungskette entscheidet, daß das Berechnungsergebnis nicht die notwendige Genauigkeit erfüllt, die Rückwärtsberechnungskette unterbrochen wird, falls ein Attribut mit einer geringen Genauigkeit unter den Attributen vorhanden ist, die von dem Benutzer eingegeben wurden oder aus internen oder externen Datenbasen der Wissensbasis entnommen wurden, selbst wenn andere Attribute, welche in dieser Berechnungskette auftreten, eine ideale Genauigkeit haben und eine Rückkehr zu dem deduktiven Folgerungsprozeß stattfindet.

10. System nach Anspruch 1, das ferner einen Bereich zum Definieren einer Einheit eines Werts eines Attributs, das in der Berechnung genannt wird, und eines Bereichs, in den der Wert gefallen ist, umfaßt, um ein Hintergrundwissen der Berechnungsformel deutlicher zu machen und eine willkürliche automatische Anzeige seiner Einheit möglich zu machen.

**Revendications**

1. Système expert industriel destiné à être utilisé dans la conception d'un système d'installation ou des dispositifs de celui-ci et dans la détection de défauts, comprenant une base de connaissances (10) comprenant une section de règles (12) pour décrire des règles d'inférence déductive, une section d'expressions (13) pour décrire une formule de calcul d'égalité, un côté droit ou un côté gauche étant un terme unique ayant une valeur et l'autre côté étant un polynôme comprenant des fonctions connues, et une section d'attributs (11) pour déclarer la nature et la valeur de chacun des attributs cités dans le calcul et dans l'inférence et pour déclarer des paramètres pour contrôler la communication entre un traitement d'inférence déductive et un traitement de calcul conformément à la formule de calcul ; et un moteur d'inférences déductives (21) pour exécuter une inférence déductive en se basant sur les règles, les formules de calcul et les attributs mémorisés dans ladite base de connaissances et qui sont décrits dans un format de description, caractérisé en ce qu'une seconde base de connaissances est prévue décrivant un contenu identique avec des formats de description différents, ladite première base de connaissances (10) servant de base de connaissances externe avec laquelle un concepteur et un utilisateur du système expert industriel peuvent entrer en contact directement et la seconde servant de base de connaissances interne, et en ce que ledit moteur d'inférences (21) comprend un mécanisme pour convertir automatiquement le format de description de ladite première base de connaissances (10) en celui de ladite seconde base de connaissances.

2. Système selon la revendication 1, comprenant, de plus, un mécanisme de calcul avant (22) pour obtenir un résultat de calcul de valeurs des attributs respectifs cités dans ledit polynôme et un mécanisme de calcul arrière (23) pour rechercher en arrière vers une formule de calcul lorsqu'un résultat de calcul de ladite formule de calcul devient nécessaire pendant une exécution d'inférence déductive et pour calculer ledit polynôme de celle-ci pour obtenir le résultat.

3. Système selon la revendication 2, dans lequel une pluralité de formules de calcul sont décrites en parallèle dans ladite section d'expressions et, lorsqu'un attribut obtenu en tant que résultat du calcul d'une desdites formules de calcul est compris dans ledit polynôme d'une autre formule de calcul dans ladite section, une exécution d'une chaîne de calculs avant devient possible en obtenant les résultats des calculs de toutes lesdites formules de calcul ayant des polynômes comprenant ledit attribut.

4. Système selon la revendication 2, dans lequel une pluralité de formules de calcul sont décrites en parallèle dans ladite section d'expressions et lorsque, pendant un calcul dudit polynôme d'une desdites formules de calcul, une valeur d'attribut à obtenir à partir d'un résultat de calcul de ladite formule de calcul devient nécessaire et, afin d'obtenir ladite valeur d'attribut, un calcul arrière est effectué par le calcul dudit polynôme de ladite formule de calcul et lorsque au moins l'un des attributs dans lesdits polynômes est donné comme résultat de calcul d'une autre formule de calcul dans ladite section d'expressions, une exécution d'une chaîne de calculs arrière est autorisée en activant le calcul arrière pour tous les attributs pouvant être obtenus à partir de ladite autre formule de calcul.

5. Système selon la revendication 2, dans lequel un traitement de chaîne de calculs avant est activé par un traitement d'une chaîne d'inférences déductives en décrivant, dans une partie de conclusion d'une règle décrivant une inférence déductive, une fonction par laquelle une chaîne de calculs est activée à partir d'une formule de calcul attribuée par un argument correspondant au numéro de ladite formule de calcul et dans lequel, une fois que ladite chaîne de calculs avant est achevée, il est renvoyé au traitement de chaîne d'inférences déductives en déduisant une autre règle après ladite règle par laquelle ledit calcul avant a été activé.

**6.** Système selon la revendication 2, comprenant, de plus, une section pour déclarer des types d'attribut de tous les attributs cités dans lesdits traitements d'inférence déductive et de calcul de formule comme ayant des valeurs d'attributs entrées par un utilisateur, obtenues à partir d'une inférence ainsi qu'à partir d'un résultat de calcul de ladite formule de calcul, et dans lequel, dans un traitement de contrôle de type d'attribut pour obtenir des valeurs d'attributs desdits attributs cités dans une partie conditionnelle de l'inférence déductive, la chaîne de calculs arrière est activée lorsqu'il s'agit d'une valeur à définir par un résultat de calcul.

**7.** Système selon la revendication 2, comprenant, de plus, un traitement pour obtenir une précision d'un résultat de calcul en définissant une précision de valeur d'attribut des attributs cités dans lesdites formules de calcul dudit polynôme, qui est basé sur la précision de mesure ou de contrôle, par ladite section d'attributs ou par une entrée d'utilisateur, etc., et en définissant en plus des approximations de phénomènes ou d'observations vrais quant à la précision de ladite formule de calcul par rapport auxdites formules de calcul et en exécutant une fonction constante ayant des arguments correspondant à une précision dudit attribut, et la précision de la formule de calcul est exécutée en plus du traitement pour obtenir le résultat de calcul lui-même, de sorte que la précision d'un résultat de calcul reflète une certitude de conclusion de la règle citant le résultat de calcul.

**8.** Système selon la revendication 7, comprenant, de plus, un mécanisme pour contrôler, à chaque fois qu'un résultat de calcul est obtenu pour l'une desdites formules de calcul pendant une exécution de la chaîne de calculs avant si, oui ou non, ledit résultat de calcul satisfait à une précision nécessaire pour l'inférence, et pour interrompre ladite chaîne de calculs et pour retourner au traitement d'inférence déductive lorsque ledit résultat de calcul ne satisfait pas à ladite précision nécessaire.

**9.** Système selon la revendication 8, dans lequel, lorsque ledit mécanisme de contrôle décide que ledit résultat de calcul ne satisfait pas à ladite précision nécessaire, pendant une exécution de la chaîne de calculs arrière, s'il y a un attribut ayant une faible précision parmi les attributs entrés par l'utilisateur ou cités à partir de bases de données interne et externe de la base de connaissances, la chaîne de calculs arrière est interrompue, même si d'autres attributs cités dans cette chaîne de calculs ont une précision idéale, et retourne au traitement d'inférence déductive.

**10.** Système selon la revendication 1, comprenant, de plus, une partie pour définir une unité d'une valeur d'un attribut cité dans le calcul et une plage dans laquelle ladite valeur se situe, pour rendre plus claire une connaissance de contexte de formule de calcul et pour permettre un affichage automatique arbitraire de sa valeur.

FIG. I

EP 0 788 049 B1

START

ACTIVATE DEDUCTIVE
INFERENCE ENGINE 21 — S1

EXECUTE DEDUCTIVE
INFERENCE ONE BY ONE
ACCORDING TO CONTENT
OF RULES - SECTION 12 — S2

S3 BACKWARD CALCULATION NECESSARY IN
PROCESSING CONDITIONAL PART OF RULE ?

NO

YES

EXECUTE CONCLUSION
PART UPON
ESTABLISHMENT OF — S4
CONDITIONAL PART

S9

EXECUTE BACKWARD
CALCULATION BY BACK-
WARD CALCULATION
MECHANISM 23

S5 ANY OTHER RULE
TO BE CITED ?

YES

NO

S6

END

FORWARD
CALCULATION
NECESSARY
?

NO

YES

S7

EXECUTE FORWARD
CALCULATION BY
FORWARD CALCU-
LATION MECHANISM
22

NO

YES

S10
BACKWARD CALCULATION
CHAIN ENDED ?

NO

S8

YES

FORWARD CALCULATION
CHAIN ENDED ?

# FIG. 2A

```
        ┌──────────────┐
        │    START     │
        └──────┬───────┘
               │
   ┌───────────▼───────────┐
   │  ACTIVATE  FORWARD    │
   │  CALCULATION MECHANISM│──── S70
   └───────────┬───────────┘
               │
   ┌───────────▼───────────┐
   │ LOAD FORMULAE NECESSARY│
   │ FOR INFERENCE TO WORKING│──── S71
   │ REGISTER              │
   └───────────┬───────────┘
               │
   ┌───────────▼───────────┐
   │  SET ATTRIBUTE VALUE  │
   │  CONTAINED IN LEFT    │──── S72
   │  TERM OF FORMULA      │
   └───────────┬───────────┘
               │
   ┌───────────▼───────────┐
   │ OBTAIN CALCULATION RESULT│
   │ AND SET IT AS RIGHT TERM │──── S73
   │ ATTRIBUTE VALUE       │
   └───────────┬───────────┘
               │
```

S74 ANOTHER FORMULA HAVING LEFT TERM CONTAINING SAME ATTRIBUTE NAME AS THE SET ATTRIBUTE EXIST ?

YES

NO

```
        ┌──────────────┐
        │     END      │
        └──────────────┘
```

FIG. 2B

18

```
            ┌─────────────┐
            │    START    │
            └─────────────┘
                   │
                   ▼
    ┌───────────────────────────┐
    │   ACTIVATE  BACKWARD      │ ──S90
    │   CALCULATION  MECHANISM  │
    └───────────────────────────┘
                   │
                   ▼
    ┌───────────────────────────┐
    │  LOAD ALL FORMULAE IN CAL-│
    │  CULATION FORMULA SECTION │ ──S91
    │  IN WORKING REGISTER      │
    └───────────────────────────┘
                   │
                   ▼
    ┌───────────────────────────┐
    │  LOAD LEFT TERM OF FORMULA│
    │  WHOSE RIGHT TERM INCUDES │
    │  SAME  ATTRIBUTE  NAME  AS│ ──S92
    │  THAT FROM CONDITIONAL PART│
    │  OF  INFERENCE  ENGINE    │
    └───────────────────────────┘
                   │
                   ▼
    ┌───────────────────────────┐
    │  DETERMINE ATTRIBUTE VALUE│ ──S93
    │  CONTAINED IN LEFT TERM   │
    └───────────────────────────┘
                   │
                   ▼             S94  VALUES OF ALL ATTRIBUTES
             ◇─────────◇             CONTAINED  IN LEFT TERM
       NO  ◇           ◇             DECIDED ?
     ◄─────◇           ◇
           ◇           ◇
             ◇─────────◇
                   │
                  YES
                   │
                   ▼
            ┌─────────────┐
            │     END     │
            └─────────────┘
```

# FIG. 2C

EP 0 788 049 B1

```
(  MOTOR-INSULATION-IS-DECREASING      PREDICATE   INFERRED    )
(  RATED-VOLTAGE                       REAL        USER        )
(  MOTOR-KW                            REAL        USER        )       11
(  INSULATION-RESISTANCE-LIMIT         REAL        CALCULATED  )       ATTRIBUTES-
(  MEASURED-INSULATION-RESISTANCE      REAL        USER        )       SECTION
(  ESTIMATED-INSULATION-RESISTANCE     REAL        CALCULATED  )
```

```
( RULE (N)      ( IF MOTOR-INSULATION-RESISTANCE-IS-DECREASING IS-TRUE )
               ( THEN ( CHECK EXPR-1 )  )                                  12
                                                                          RULES-
( RULE (N+1)    ( IF ESTIMATED-INSULATION-RESISTANCE IS-LESS-THAN 1.0 )   SECTION
               ( DECREASE-OF-MOTOR-INSULATION-RESISTANCE IS-TRUE )
```

```
( EXPR-1   ( RATED-VOLTAGE / (MOTOR-KW+1000) = INSULATION-RESISTANCE-LIMIT )
)                                                                             13
                                                                             EXPRESSIONS-
( EXPR-2  ( MEASURED-INSULATION-RESISTANCE / INSULATION-RESISTANCE-LIMIT      SECTION
             = ESTIMATED-INSULATION-RESISTANCE ) )
```

10 KNOWLEDGE BASE

# F I G. 3

```
( DEFUN EXPR - CAL ()
 ( SETQ V (TERM))
 ( LOOP
 ( COND
    ((OR (EQUAL CHAR'+)(EQUAL CHAR'-))
     (SETQ V ( LIST CHAR V (TERM))
 )
 (T (RETURN V) ) ) ) )

( DEFUN TERM ()
 (SETQ V (FACTOR))
 (LOOP
   (COND
     ((OR ( EQUAL CHAR'*)(EQUAL CHAR'/))
      (SETQ V ( LIST CHAR V (FACTOR)))
     )
     (T(RETURN V) ) ) )
( DEFUN FACTOR ()
  ( NEXT )
  ( COND ((SYMBOLP CHAR )
          ( SETQ X CHAR )(NEXT )(RETURN X ))
        ( T (PRINC" error ---- ")) ) ) )
( DEFUN NEXT ()
  (SETQ EXPR ( CDR EXPR ))
  (SETQ CHAR ( CAR EXPR ))
  (RETURN CHAR ) )
```

220
CONVERSION MECHANISM

# FIG. 4

EP 0 788 049 B1

```
( DIFFERENCE - BETWEEN - 2 SF - AND - VIBRATION - FREQUENCY    REAL        CALCULATED )
( POSSIBILITY - OF - ROTOR - ABNORMAL                          PREDICATE   INFERRED   )
( POWER - SUPPLY - FREQ                                        REAL        USER       )
( POLE - NUMBER                                                REAL        USER       )
( SYNCHRONOUS - SPEED                                          REAL        CALCULATED )
( MEASURED - SPEED                                             REAL        USER       )
( SLIP                                                         REAL        CALCULATED )
( 2 SF                                                         REAL        CALCULATED )
( VIBRATION - FREQ                                             REAL        USER       )
```

11 ATTRIBUTES - SECTION

```
( RULE (N)
  ( IF DIFFERENCE - BETWEEN - 2 SF - AND - VIBRATION - FREQUENCY IS - LESS - THAN  0.1 )
  ( THEN POSSIBILITY - OF - ROTOR - ABNORMAL IS - TRUE )
)
```

12 RULES - SECTION

```
( EXPR - 1   ( 120.0 * POWER - SUPPLY - FREQ / POLE - NUMBER = SYNOHRONOUS - SPEED ) )
( EXPR - 2   ( ( SYNCHRONOUS - SPEED ) - MEASURES - SPEED ) / SYNOHRONOUS - SPEED = SLIP ) )
( EXPR - 3   ( 2.0 * SLIP * POWER - SUPPLY - FREQ = 2 SF ) )
( EXPR - 4   ( ABS ( 2 SF - VIBRATION - FREQ ) / 2 SF
              = DIFFERENCE - BETWEEN - 2 SF - AND - VIBRATION - FREQUENCY )
```

13 EXPRESSIONS - SECTION

10 KNOWLEDGE BASE

FIG. 5

```
A  DESCRIPTION - EXAMPLE OF
   ATTRIBUTE - ACCURACY



( INLET - COOLING - AIR - TEMPERATURE  REAL  USER  0.9 )




A  DESCRIPTION - EXAMPLE OF
   EXPRESSION - ACCURACY



( EXPR - 1
  ( RATED - VOLTAGE / ( MOTOR - KW + 1000 ) = INSULATION - RESISTANCE - LIMIT )
    0.9
   )
```

# FIG. 6

EP 0 788 049 B1

```
ACTIVATION   OF   THE   FUNCTION

( ESTIMATION-ACCURACY EXPRESSION-NUMBER ATTRIBUTE-LIST )
  ; EXPRESSION-NUMBER IS LIST , INCLUDING EXPRESSION & ITS ACCURACY

DEFINITION   OF   THE   FUNCTION

( DEFUN ESTIMATION-ACCURACY ( EXPR-NUM ATTR-LIST ) )
  ( SETQ EXPR-ACURA ( CADDR EXPR-NUM) )
  ( SETQ CUR-ATTR ( CAR ATTR-LIST) )
  ( SETQ MIN-ATTR-ACURA ( CADDDR CUR-ATTR ) )
( LOOP
  ( COND ( NULL ( CADR ATTR-LIST ) ( RETURN ACCURACY ) )
         ( T ( SETQ ATTR-LIST ( CDR ATTR-LIST ) )
             ( SETQ CUR-ATTR ( CAR ATTR-LIST ) )
             ( SETQ CUR-ATTR-ACURA ( CADDDR CUR-ATTR ))
             ( SETQ MIN-ATTR-ACURA ( MIN MIN-ATTR-ACURA CUR-ATTR-ACURA ))
             ( SETQ ACCURACY ( * EXPR-ACURA MIN-ATTR-ACURA ) )

    )   )   )   )

  ; In above case , accuracy-estimation is simple such as ,
  ;     Result-accuracy-expression-accuracy x ( minimum value
  ;                                          of attribute-accuracies )
```

# FIG. 7

EP 0 788 049 B1